# EUROPÄISCHE PATENTSCHRIFT

(11) **EP 0 948 224 B1**
(45) Veröffentlichungstag und Bekanntmachung des Hinweises auf die Patenterteilung: **07.11.2007**
(21) Anmeldenummer: 98114704.4
(22) Anmeldetag: 05.08.1998
(51) Int. Cl.: H04Q 7/32, H04M 1/72

(54) **Verfahren zur drahtlosen Datenübertragung und Zwischenstation**
Wireless data transmission method and intermediate station
Méthode pour la transmission de données "sans-fil" et station intermédiaire

(30) Priorität: 22.11.1997 DE 19751845
(43) Veröffentlichungstag der Anmeldung: 06.10.1999
(73) Patentinhaber: IPCom GmbH & Co. KG, 82049 Pullach (DE)
(72) Erfinder: von Haefen, Holger, 38300 Wolfenbüttel (DE); Sandhaus, Georg, 38304 Wolfenbüttel (DE)
(74) Vertreter: Gigerich, Jan

(56) Entgegenhaltungen:
- EP-A- 0 585 030
- EP-A- 0 748 139
- WO-A-89/04569

## Beschreibung

### Stand der Technik

Die Erfindung geht von einem Verfahren zur drahtlosen Datenübertragung zwischen einem Endgerät und einer Basisstation nach der Gattung des unabhängigen Anspruchs 1 und von einer Zwischenstation nach der Gattung des unabhängigen Anspruchs 6 aus.

Verfahren zur drahtlosen Datenübertragung zwischen einem Endgerät und einer Basisstation sind bereits bekannt und werden für die Schnurlostelefonie angewendet. Von der Firma Dancall wird außerdem bereits der DECT-Repeater "RP8001" angeboten (DECT = Digital Enhanced Cordless Telecommunications), der als Relais-Station in einem als DECT-System ausgebildeten Schnurlostelefoniesystem arbeitet und eine vorhandene Funkzelle vergrößert. Ein solcher DECT-Repeater ist in der Regel am Rand einer Funkzelle plaziert. Ein als DECT-Mobilteil ausgebildetes Schnurlostelefon kann außerhalb der Funkzelle, das heißt bei zu großer Entfernung von der die Funkzelle aufspannenden Basisstation eine Verbindung zu dem DECT-Repeater aufbauen. Der DECT-Repeater baut daraufhin eine Verbindung zur Basisstation auf und leitet die Daten zwischen dem DECT-Mobilteil und der Basisstation transparent weiter. Der DECT-Repeater agiert somit in Richtung des DECT-Mobilteils wie eine Basisstation und in Richtung der Basisstation wie ein DECT-Mobilteil.

Aus der Funkschau 19/95 ist es bekannt, Daten zwischen Computern und Druckern oder Telefonen drahtlos in einem Infrarotfrequenzbereich zu übertragen, wobei die auf diese Weise optisch miteinander gekoppelten Geräte jeweils eine Infrarotschnittstelle beispielsweise nach dem IrDA-Standard (Infrared Data Association) umfassen. Solche IrDA-Schnittstellen sind bereits in portable Personalcomputer, PDA's (Personal Digital Assistants), Drucker usw. eingebaut.

Die EP-A 585 030 zeigt eine Vorgehensweise, nach der ein Handset an eine Mobilfunkeinheit angeschlossen ist, die wiederum eine Funkverbindung in ein Telekommunikationsnetz aufbauen kann.

Entsprechend gilt für die EP-A 748 139. Auch hier wird ein PC über eine drahtlose Schnittstelle an ein Mobilfunkgerät angeschlossen, welches wiederum Daten in ein Telekommunikationsnetz übertragen kann.

### Vorteile der Erfindung

Das erfindungsgemäße Verfahren mit den Merkmalen des unabhängigen Anspruchs 1 und die Zwischenstation mit den Merkmalen des unabhängigen Anspruchs 6 haben demgegenüber den Vorteil, daß Daten zwischen dem Endgerät und einer in einer Funkzelle der Basisstation angeordneten Zwischenstation durch optische Signale übertragen werden und daß die Daten zwischen der Zwischenstation und der Basisstation durch Funksignale, vorzugsweise nach dem DECT-Standard übertragen werden. Auf diese Weise können Endgeräte mit einer optischen Sende- und/oder Empfangseinheit mit der für Funkverkehr ausgebildeten Basisstation kommunizieren. Somit wird mittels der Zwischenstation auf einfache Weise ein Übergang von Endgeräten mit optischer Schnittstelle in ein Funksystem ermöglicht.

Durch die in den Unteransprüchen aufgeführten Maßnahmen sind vorteilhafte Weiterbildungen und Verbesserungen des im unabhängigen Anspruch 1 angegebenen Verfahrens und der im unabhängigen Anspruch 6 angegebenen Zwischenstation möglich.

Besonders vorteilhaft ist es, daß bei einer Verbindungsanforderung des Endgerätes von der Zwischenstation ein Funkkanal zur Basisstation geschaltet wird. Somit wird das Endgerät mit der optischen Schnittstelle auf besonders einfache Weise an das Funkkommunikationssystem angeschlossen, wobei für diesen Anschluß ein herkömmlicher Funkkanal eingerichtet werden kann. An die Basisstation müssen daher keine speziellen Zugangspunkte möglicherweise noch durch geeignete Verkabelungen angeschlossen werden, die einen optischen Datenaustausch mit dem entsprechenden Endgerät organisieren. Vielmehr kann auf die bestehende Infrastruktur des Funksystems zur Integration des Endgerätes mit optischer Schnittstelle zurückgegriffen werden, wodurch Aufwand und Kosten eingespart werden.

Ein weiterer Vorteil besteht darin, daß die von der Basisstation empfangenen Daten an ein angeschlossenes Daten- oder Telekommunikationsnetz übertragen werden. Das Schnurlostelefonie-System kann somit sowohl an lokalen als auch öffentlichen Netzen angekoppelt sein, so daß von dem Endgerät mit optischer Schnittstelle ein Zugriff auf entfernte, an dem Daten- oder Telekommunikationsnetz angeschlossene Rechner möglich ist. Da der Zugriff über das Funksystem erfolgt, ist keine eigene Schnittstelle des optischen Übertragungssystems zum lokalen oder öffentlichen Netz erforderlich.

Ein weiterer Vorteil besteht darin, daß die Zwischenstation von von einem zweiten Endgerät empfangenen Funksignalen abgeleitete Funksignale an die Basisstation abstrahlt. Auf diese Weise wird die Funktionalität der Zwischenstation erheblich erweitert, indem die Zwischenstation sowohl als Repeater für außerhalb der durch die Basisstation aufgespannten Funkzelle befindliche Funkgeräte oder Schnurlostelefone wirkt, als auch den Übergang von Endgeräten mit optischer Schnittstelle in das Funksystem ermöglicht. Durch die Integration der Repeaterfunktion für als Funkgeräte oder Schnurlostelefone ausgebildete Endgeräte und des Übergangs von Endgeräten mit optischer Schnittstelle in das Funksystem in eine einzige Zwischenstation werden Aufwand und Kosten eingespart, so daß für den Übergang der Endgeräte mit optischer Schnittstelle in das Funksystem keine eigene Zwischenstation erforderlich ist.

### Zeichnung

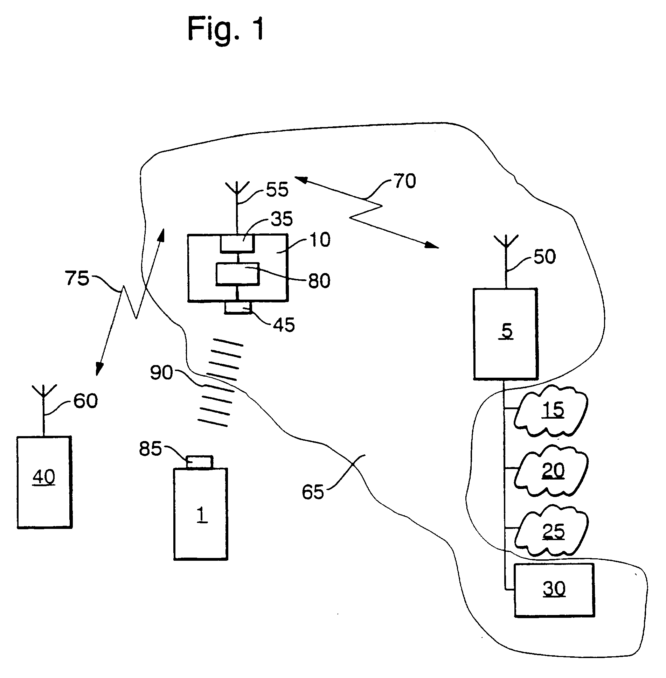

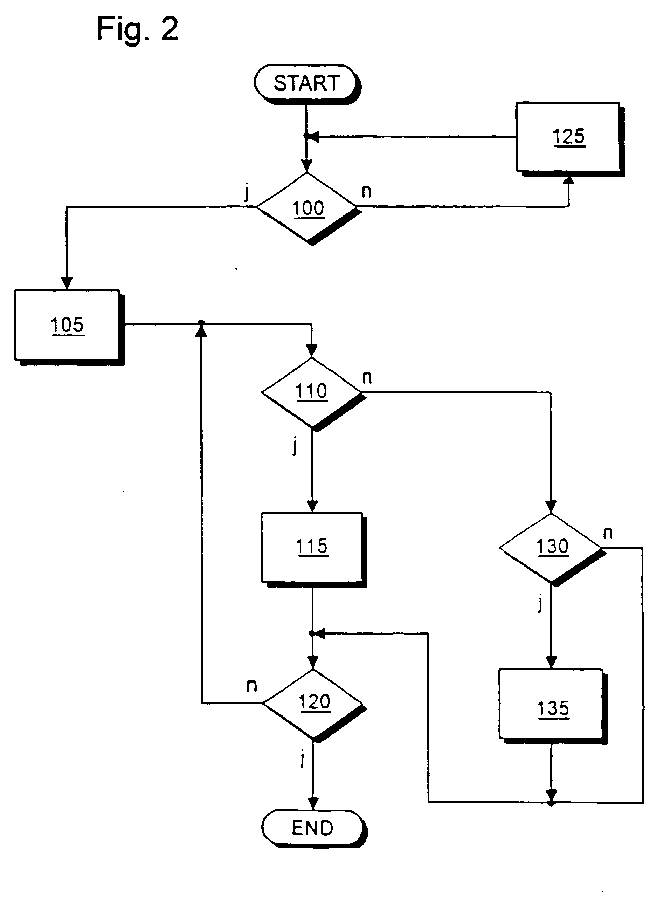

Ein Ausführungsbeispiel der Erfindung ist in der Zeichnung dargestellt und in der nachfolgenden Beschreibung näher erläutert. Es zeigen Figur 1 ein Blockschaltbild eines Funksystems, an das ein Endgerät mit optischer Schnittstelle angeschlossen ist, und Figur 2 einen Ablaufplan für die Funktionsweise des erfindungsgemäßen Verfahrens.

### Beschreibung des Ausführungsbeispiels

In Figur 1 kennzeichnet 5 eine Basisstation beispielsweise eines Schnurlostelefonsystems. Dem Schnurlostelefonsystem kann dabei beispielsweise der DECT-Standard zugrundegelegt sein. Es kann sich bei dem Funksystem jedoch auch um ein Mobilfunksystem beispielsweise nach dem GSM-Standard handeln. An die Basisstation 5 ist eine erste Sende-/Empfangsantenne 50 angeschlossen. Die Basisstation 5 spannt eine Funkzelle 65 auf. An die Basisstation 5 kann ein Drucker 30 angeschlossen sein, der sich gemäß Figur 1 innerhalb der Funkzelle 65 befindet, sich jedoch auch außerhalb der Funkzelle 65 befinden könnte. Alternativ oder zusätzlich zum Drucker 30 kann an die Basisstation 5 mindestens ein Daten- oder Telekommunikationsnetz 15, 20, 25 angeschlossen sein. Dabei kann es sich um ein lokales oder ein öffentliches Netz handeln. Gemäß dem Ausführungsbeispiel nach Figur 1 ist die Basisstation 5 an ein ISDN-Netz 15 (Integrated Services Data Network), ein lokales Netz 20 und ein als Internet ausgebildetes Datennetz 25 angeschlossen. Auf diese Weise kann die Basisstation 5 mit Teilnehmern dieser Daten- oder Telekommunikationsnetze 15, 20, 25 kommunizieren. Diese Teilnehmer können weit außerhalb der Funkzelle 65 angeordnet sein. Innerhalb der Funkzelle 65, jedoch vorzugsweise in einem Randbereich der Funkzelle 65 ist eine Zwischenstation 10 angeordnet. Die Zwischenstation 10 umfaßt eine Funksende-/-empfangseinheit 35, an die eine zweite Sende-/Empfangsantenne 55 angeschlossen ist. Zwischen der Zwischenstation 10 und der Basisstation 5 kann somit eine erste Funkverbindung 70 aufgebaut werden, die je nach Verwendung des zugrundeliegenden Funkstandards eine DECT-Funkverbindung, eine GSM-Funkverbindung oder dergleichen sein kann. Im beschriebenen Ausführungsbeispiel ist der DECT-Standard zugrundegelegt, so daß die erste Funkverbindung 70 eine DECT-Funkverbindung darstellt. Außerhalb der Funkzelle 60 befindet sich ein zweites Endgerät 40, das als Schnurlostelefon, als Mobiltelefon, als Mobilfunkgerät als Handfunkgerät, als Betriebsfunkgerät oder dergleichen ausgebildet sein kann. Im vorliegenden Beispiel soll das zweite Endgerät 40 als Schnurlostelefon nach dem DECT-Standard ausgebildet sein. An das zweite Endgerät 40 ist eine dritte Sende-/Empfangsantenne 60 angeschlossen. Zwischen dem zweiten Endgerät 40 und der Zwischenstation 10 kann eine zweite Funkverbindung 75 aufgebaut werden, der gemäß dem beschriebenen Ausführungsbeispiel der DECT-Standard zugrundeliegt. Die Zwischenstation 10 arbeitet somit als Relais-Station in dem beschriebenen Funksystem und vergrößert dadurch die Reichweite der Basisstation 5. Da sich das zweite Endgerät 40 außerhalb der Funkzelle 65 befindet, kann es keine direkte Funkverbindung mit der Basisstation 5 aufnehmen. Es kann jedoch die zweite Funkverbindung 75 zur Zwischenstation 10 aufbauen. Die Zwischenstation 10 baut daraufhin die erste Funkverbindung 70 zur Basisstation 5 auf und leitet entsprechende Funkdatensignale zwischen dem zweiten Endgerät 40 und der Basisstation 5 transparent weiter. Die Zwischenstation 10 agiert in Richtung des zweiten Endgerätes 40 wie eine Basisstation und in Richtung der Basisstation 5 wie ein Endgerät. Umgekehrt kann in entsprechender Weise von der Basisstation 5 eine Funkverbindung über die Zwischenstation 10 zum zweiten Endgerät 40 aufgebaut werden.

Die Zwischenstation 10 umfaßt weiterhin eine als optische Sende-/Empfangseinheit ausgebildete Schnittstelle 45. Die Schnittstelle 45 kann dabei beispielsweise zum Aussenden und Empfangen von optischen Signalen in einem Infrarotfrequenzbereich ausgebildet sein. Dazu kann die Schnittstelle 45 beispielsweise nach dem IrDA-Standard (Infrared Data Association) ausgebildet sein. Über eine Umsetzeinheit 80 ist die Funksende-/-empfangseinheit 35 mit der Schnittstelle 45 verbunden. Gemäß dem Ausführungsbeispiel nach Figur 1 ist außerhalb der Funkzelle 65 ein erstes Endgerät 1 angeordnet. Das erste Endgerät 1 kann jedoch auch innerhalb der Funkzelle 65 angeordnet sein. Das erste Endgerät 1 umfaßt eine optische Sende-/Empfangseinheit 85. Die optische Sende-/Empfangseinheit 85 des ersten Endgerätes 1 kann dabei ebenfalls optische Signale beispielsweise in einem Infrarotwellenlängenbereich aussenden und empfangen. Sie kann beispielsweise ebenfalls gemäß dem IrDA-Standard ausgebildet sein. Zwischen dem ersten Endgerät 1 und der Zwischenstation 10 kann auf diese Weise eine optische Verbindung 90 für eine optische Datenübertragung aufgebaut werden. Mittels der Umsetzeinheit 80 kann eine Umwandlung zwischen optischen Datensignalen und Funkdatensignalen erfolgen, so daß das erste Endgerät 1 ebenfalls mit der Basisstation 5 kommunizieren kann. Auf diese Weise können sowohl zwischen dem ersten Endgerät 1 und einem Teilnehmer eines der Daten- oder Telekommunikationsnetze 15, 20, 25 bzw. dem Drucker 30 als auch zwischen dem zweiten Endgerät 40 und einem Teilnehmer eines der Daten- oder Telekommunikationsnetzes 15, 20, 25 bzw. dem Drucker 30 Daten ausgetauscht werden. So können beispielsweise vom ersten Endgerät 1 oder vom zweiten Endgerät 40 Daten über die Zwischenstation 10 an die Basisstation 5 übertragen und von dort an einen Teilnehmer eines der Daten- oder Telekommunikationsnetze 15, 20, 25 oder den Drucker 30 weitergeleitet werden. Zusätzlich oder anstelle des Druckers 30 kann an die Basisstation 5 eine beliebige Datenausgabeeinheit angeschlossen sein und in entsprechender Weise mit dem ersten Endgerät 1 oder dem zweiten Endgerät 40 kommunizieren. Ebenso können an die Basisstation 5 ein lokaler Datenbank-Server, ein Domotik-System usw. angeschlossen sein und über die Basisstation 5 und die Zwischenstation 10 mit dem ersten Endgerät 1 und/oder dem zweiten Endgerät 40 in der beschriebenen Weise kommunizieren.

Bei einer Verbindungsanforderung vom ersten Endgerät 1 bzw. vom zweiten Endgerät 40 wird von der Zwischenstation 10 ein Funkkanal zur Basisstation 5 geschaltet, über den die Daten vom ersten Endgerät 1 bzw. vom zweiten Endgerät 40 zur Basisstation 5 übertragen werden. Entsprechend kann umgekehrt von der Basisstation 5 ein Funkkanal zur Zwischenstation 10 geschaltet werden, über den Daten eines Teilnehmers eines der Daten- oder Telekommunikationsnetze 15, 20, 25 oder weiterer an die Basisstation 5 angeschlossener Einrichtungen an die Zwischenstation 10 zur Weiterleitung an das erste Endgerät 1 und/oder das zweite Endgerät 40 übertragen werden.

In Figur 2 ist ein Ablaufplan für eine beispielhafte Funktionsweise des erfindungsgemäßen Verfahrens dargestellt. Bei einem Programmpunkt 100 prüft die Zwischenstation 10, ob vom ersten Endgerät 1 ein Verbindungswunsch vorliegt. Ist dies der Fall, so wird zu einem Programmpunkt 105 verzweigt, andernfalls wird zu einem Programmpunkt 125 verzweigt. Ein vom ersten Endgerät 1 ausgehender Verbindungswunsch wird dabei durch ein von der Sende-/Empfangseinheit 85 des ersten Endgerätes 1 abgestrahltes, im beschriebenen Ausführungsbeispiel im Infrarotfrequenzbereich liegendes optisches Anforderungssignal der Zwischenstation 10 mitgeteilt. Bei Programmpunkt 105 schaltet die Zwischenstation 10 einen Funkkanal zur Basisstation 5. Bei Programmpunkt 125 wird eine Warteschleife durchlaufen. Anschließend wird zu Programmpunkt 100 zurückverzweigt. Nach Programmpunkt 105 wird zu einem Programmpunkt 110 verzweigt. Bei Programmpunkt 110 prüft die Zwischenstation 10, ob vom ersten Endgerät 1 optische Datensignale in der Schnittstelle 45 empfangen werden. Ist dies der Fall, so wird zu einem Programmpunkt 115 verzweigt, andernfalls wird zu einem Programmpunkt 130 verzweigt. Bei Programmpunkt 115 wandelt die Umsetzeinheit 80 die optischen Datensignale in Funkdatensignale um und veranlaßt die Funksende-/-empfangseinheit 35 zur Abstrahlung der Funkdatensignale an die Basisstation 5. Anschließend wird zu einem Programmpunkt 120 verzweigt. Bei Programmpunkt 120 prüft die Zwischenstation 10, ob die Verbindung beendet wurde. Ist dies der Fall, so wird der Programmteil verlassen, andernfalls wird zu Programmpunkt 110 zurückverzweigt. Bei Programmpunkt 130 prüft die Zwischenstation 10, ob Funkdatensignale von der Basisstation 5 in der Funksende-/-empfangseinheit 35 empfangen wurden und ob diese Funkdatensignale an das erste Endgerät 1 adressiert sind. Ist dies der Fall, so wird zu einem Programmpunkt 135 verzweigt, andernfalls wird zu Programmpunkt 120 verzweigt.

Bei Programmpunkt 135 wandelt die Umsetzeinheit 80 die Funkdatensignale in optische Datensignale um. Die optischen Datensignale werden dann mittels der in diesem Ausführungsbeispiel als Infrarotverbindung ausgebildeten optischen Verbindung 90 an das erste Endgerät 1 von der Schnittstelle 45 abgestrahlt. Anschließend wird zu Programmpunkt 120 verzweigt.

Anstelle einer bidirektionalen optischen Datenübertragung zwischen der Zwischenstation 10 und dem ersten Endgerät 1 kann auch eine unidirektionale Datenübertragung vorgesehen sein, wobei je nach Übertragungsrichtung dann am ersten Endgerät 1 nur eine optische Sendeeinrichtung bzw. nur eine optische Empfangseinrichtung vorzusehen ist und die Schnittstelle 45 lediglich eine optische Empfangseinrichtung bzw. eine optische Sendeeinrichtung umfassen muß. Entsprechend ist dann an der Zwischenstation 10 auch nur eine Funksendeeinheit bzw. eine Funkempfangseinheit vorzusehen. In diesem Fall ist jedoch zwischen dem zweiten Endgerät 40 und der Basisstation 5 kein Datenaustausch mehr möglich.

Mittels der Zwischenstation 10 kann in den typischen Einsatzbereichen von Funk-Repeatern, beispielsweise von DECT-Repeatern für große Büroflächen, für Fabrikhallen oder dergleichen neben der Relais-Funktion für entsprechende Funkgeräte, beispielsweise für DECT-Schnurlostelefone, ein Übergang von Endgeräten mit optischer Schnittstelle in das entsprechende Funksystem realisiert werden.

## Patentansprüche

1. Verfahren zur drahtlosen Datenübertragung zwischen einem Endgerät (1) und einer Basisstation (5), welche eine Funkzelle (65) aufspannt, **dadurch gekennzeichnet, dass** Daten zwischen dem Endgerät (1) und einer in der Funkzelle der Basisstation (5) angeordneten Zwischenstationen (10) durch optische Signale übertragen werden und dass die Daten zwischen der Zwischenstation (10) und der Basisstation (5) durch Funksignale, vorzugsweise nach dem DECT-Standard (Digital Enhanced Cordless Telecomunications), übertragen werden, und dass die von der Basisstation (5) empfangenen Daten an ein Daten- oder Telekommunikationsnetz (15, 20, 25) übertragen werden, welches an die Basisstation (5) angeschlossen ist, wobei die Zwischenstation (10) eine Funkschnittstelle aufweist, über die sie von einem zweiten Endgerät (40) Funksignale empfängt und daraus abgeleitete Funksignale an die Basisstation (5) abstrahlt.

2. Verfahren nach Anspruch 1, **dadurch gekennzeichnet, daß** bei Übertragung der Daten vom Endgerät (1) an die Basisstation (5) die optischen Signale von der Zwischenstation (10) in die Funksignale umgewandelt werden.

3. Verfahren nach Anspruch 1 oder 2, **dadurch gekennzeichnet, daß** bei Übertragung der Daten von der Basisstation (5) an das Endgerät (1) die Funksignale von der Zwischenstation (10) in die optischen Signale umgewandelt werden.

4. Verfahren nach Anspruch 1, 2 oder 3, **dadurch gekennzeichnet, daß** bei einer Verbindungsanforderung des Endgerätes (1) von der Zwischenstation (10) ein Funkkanal zur Basisstation (5) geschaltet wird.

5. Verfahren nach einem der vorherigen Ansprüche, **dadurch gekennzeichnet, daß** die von der Basisstation (5) empfangenen Daten an eine angeschlossene Ausgabeeinheit (30), insbesondere einen Drucker, übertragen werden.

6. Zwischenstation (10) mit eine Funksende- und Empfangseinheit (35), **dadurch gekennzeichnet, dass** die Zwischenstation (10) eine Schnittstelle (45) für eine Übertragung optischer Datensignale zwischen einem ersten Endgerät (1) und der Zwischenstation (10), insbesondere in einem Infrarotfrequenzbereich, umfasst, dass in der Zwischenstation (10) eine Umwandlung zwischen den optischen Datensignalen und Funkdatensignalen erfolgt und dass die Funkdatensignale über die Funksende- und Empfangseinheit (35) zwischen der Zwischenstation (10) und einer Basisstation (5) übertragen werden, welche die empfangenen Daten an ein Daten- oder Telekommunikationsnetz überträgt, wobei die Basisstation (5) eine Funkzelle (65) aufspannt, in der die Zwischenstation sich befindet und wobei das Daten- oder Telekommunikationsnetz an die Basisstation angeschlossen ist, wobei die Zwischenstation (10) eine Funkschnittstelle aufweist, über die sie von einem zweiten Endgerät (40) Funksignale empfängt und daraus abgeleitete Funksignale an die Basisstation (5) abstrahlt

7. Zwischenstation (10) nach Anspruch 6, **dadurch gekennzeichnet, daß** die Schnittstelle (45) eine optische Sende-/Empfangseinheit, insbesondere nach dem IrDA-Standard (Infrared Data Association) umfaßt.

8. Zwischenstation (10) nach Anspruch 6 oder 7, **dadurch gekennzeichnet, daß** die Zwischenstation (10) von dem ersten Endgerät (1) empfangene optische Datensignale in Funkdatensignale umwandelt und die Funkdatensignale an die Basisstation (5) abstrahlt.

9. Zwischenstation (10) nach Anspruch 6, 7 oder 8, **dadurch gekennzeichnet, daß** die Zwischenstation (10) von der Basisstation (5) empfangene Funkdatensignale in optische Datensignale umwandelt und die optischen Datensignale an das erste Endgerät (1) abstrahlt.

10. Zwischenstation (10) nach einem der Ansprüche 6 bis 9, **dadurch gekennzeichnet, daß** die Zwischenstation (10) bei einer Verbindungsanforderung des ersten Endgerätes (1) einen Funkkanal, vorzugsweise nach dem DECT-Standard, zur Basisstation (5) schaltet.

## Claims

1. Method for wireless data transmission between a terminal (1) and a base station (5) which spans a radio cell (65), **characterized in that** data between the terminal (1) and a relay station (10) arranged in the radio cell of the base station (5) are transmitted by optical signals and **in that** the data between the relay station (10) and the base station (5) are transmitted by radio signals, preferably in accordance with the DECT (Digital Enhanced Cordless Telecommunications) standard, and **in that** the data received by the base station (5) are transmitted to a data or telecommunications network (15, 20, 25) which is connected to the base station (5), wherein the relay station (10) has a radio interface via which it receives radio signals from a second terminal (40) and radiates radio signals derived therefrom to the base station (5).

2. Method according to Claim 1, **characterized in that** during the transmission of the data from the terminal (1) to the base station (5), the optical signals are converted into the radio signals by the relay station (10).

3. Method according to Claim 1 or 2, **characterized in that** during the transmission of the data from the base station (5) to the terminal (1), the radio signals are converted into the optical signals by the relay station (10).

4. Method according to Claim 1, 2 or 3, **characterized in that** with a call request of the terminal (1), a radio channel is switched to the base station (5) by the relay station (10).

5. Method according to one of the preceding claims, **characterized in that** the data received by the base station (5) are transmitted to a connected output unit (30), particularly a printer.

6. Relay station (10) comprising a radio transmitting and receiving unit (35), **characterized in that** the relay station (10) comprises an interface (45) for the transmission of optical data signals between a first terminal (1) and the relay station (10), particularly in an infrared frequency range, **in that** a conversion between the optical data signals and radio data signals takes place in the relay station (10), and **in that** the radio data signals are transmitted via the radio transmitting and receiving unit (35) between the relay station (10) and a base station (5) which transmits the received data to a data or telecommunications network, wherein the base station (5) spans a radio cell (65) in which the relay station is located and wherein the data or telecommunications network is connected to the base station, wherein the relay station (10) has a radio interface via which it receives radio signals from a second terminal (40) and radiates radio signals derived therefrom to the base station (5).

7. Relay station (10) according to Claim 6, **characterized in that** the interface (45) comprises an optical transmitting/receiving unit, particularly in accordance with the IrDA (Infrared Data Association) standard.

8. Relay station (10) according to Claim 6 or 7, **characterized in that** the relay station (10) converts optical data signals received from the first terminal (1) into radio data signals and radiates the radio data signals to the base station (5).

9. Relay station (10) according to Claim 6, 7 or 8, **characterized in that** the relay station (10) converts radio data signals received from the base station (5) into optical data signals and radiates the optical data signals to the first terminal (1).

10. Relay station (10) according to one of Claims 6 to 9, **characterized in that** the relay station (10), with a call request of the first terminal (1), switches a radio channel, preferably in accordance with the DECT standard, to the base station (5).

## Revendications

1. Procédé de transmission de données par une liaison sans fil entre un terminal (1) et une station de base (5) qui couvre une cellule radio (65),
**caractérisé en ce qu'**
on transmet les données entre le terminal (1) et l'une des stations intermédiaires (10) prévue dans la cellule radio de la station de base (5) par transmission de signaux optiques et
on transmet les données entre la station intermédiaire (10) et la station de base (5) par des signaux radio, de préférence selon le standard DECT (téléphone sans fil numérique), et
les données reçues par la station de base (5) sont transmises dans un réseau de données ou de télécommunication (15, 20, 25) relié à la station de base (5),
la station intermédiaire (10) ayant une interface radio par laquelle elle reçoit les signaux radio d'un second terminal (40) et rayonne les signaux radio qu'elle en dérive vers la station de base.

2. Procédé selon la revendication 1,
**caractérisé en ce qu'**
à la transmission de données par le terminal (1) vers la station de base (5), on convertit les signaux optiques de la station intermédiaire (10) en signaux radio.

3. Procédé selon la revendication 1 ou 2,
**caractérisé en ce qu'**
à la transmission des données de la station de base (5) au terminal (1), on convertit les signaux radio de la station intermédiaire (10) en signaux optiques.

4. Procédé selon les revendications 1, 2 ou 3,
**caractérisé en ce que**
dans le cas d'une requête de liaison du terminal (1), la station intermédiaire (10) commute un canal radio vers la station de base (5).

5. Procédé selon l'une des revendications précédentes,
**caractérisé en ce que**
les données reçues de la station de base (5) sont transmises à une unité de sortie (30) raccordée, notamment à une imprimante.

6. Station intermédiaire (10) comportant une unité d'émission et une unité de réception radio (35),
**caractérisée en ce que**
la station intermédiaire (10) comporte une interface (45) pour une transmission de signaux de données optiques entre un premier terminal (1) et la station intermédiaire (10), notamment dans le domaine infrarouge,
la station intermédiaire (10) effectue une conversion entre les signaux de données optiques et les signaux de données radio et
les signaux de données radio sont transmis par l'unité d'émission et de réception radio (35) entre la station intermédiaire (10) et une station de base (5) qui transmet les données reçues vers un réseau de données ou de télécommunication, la station de base (5) couvrant une cellule radio (65) dans laquelle se trouve la station intermédiaire et
le réseau de données ou de télécommunication est relié à la station de base, la station intermédiaire (10) ayant une interface radio qui reçoit les signaux radio d'un second terminal (40) et rayonne vers la station de base (5) des signaux radio qui en sont dérivés.

7. Station intermédiaire (10) selon la revendication 6,
**caractérisée en ce que**
l'interface (45) comporte une unité d'émission/réception optique fonctionnant notamment selon le standard (IrDA) (Association de Données par infrarouge).

8. Station intermédiaire (10) selon la revendication 6 ou 7,
**caractérisée en ce que**
la station intermédiaire (10) convertit les signaux de données optiques reçus par le premier terminal (1) en signaux de données radio qu'elle émet vers la station radio (5).

9. Station intermédiaire (10) selon les revendications 6, 7, 8,
**caractérisée en ce que**
la station intermédiaire (10) convertit les signaux de données radio reçus par la station de base (5) en signaux de données optiques qu'elle émet vers le premier terminal (10).

10. Station intermédiaire (10) selon l'une des revendications 6 à 9,
**caractérisée en ce que**
pour une requête de liaison venant du premier terminal (10) la station intermédiaire commute un canal radio, de préférence selon le standard DECT vers la station de base (5).
